# EUROPÄISCHE PATENTANMELDUNG

(11) **EP 3 249 659 A1**
(43) Veröffentlichungstag der Anmeldung: **29.11.2017**
(21) Anmeldenummer: 16170822.7
(22) Anmeldetag: 23.05.2016
(51) Int. Cl.: H01B 13/06, H01B 13/30, H01B 3/00, H01B 7/18

(54) **GLIMMSCHUTZ, ELEKTRISCHE MASCHINE UND VERFAHREN ZUM HERSTELLEN DES GLIMMSCHUTZES**

(71) Anmelder: Siemens Aktiengesellschaft, 80333 München (DE)
(72) Erfinder: Brockschmidt, Mario, 45131 Essen (DE); Eckert, Christopher, 45219 Essen (DE); Ettler, Manuel, 52388 Nörvenich-Wissersheim (DE); Franke, Vera Kristin, 45147 Essen (DE); Höhner, Rene, 45881 Gelsenkirchen (DE); Mashkin, Andrey, 50672 Köln (DE); Pohlmann, Friedhelm, 45355 Essen (DE); Schmidt, Guido, 42799 Leichlingen (DE); Seybold, Ralph, 91088 Bubenreuth (DE); Staubach, Christian, 45768 Marl (DE)

(57) **Zusammenfassung**

Die Erfindung betrifft einen Glimmschutz für eine elektrische Maschine, mit einem Lack (4), der ein erstes Polymerharz, in dem ersten Polymerharz dispergierte erste elektrisch leitfähige Partikel (6) und in dem ersten Polymerharz dispergierte Mikrokapseln (5) aufweist, die in ihrem Inneren ein zweites Polymerharz aufweisen.

## Beschreibung

Die Erfindung betrifft einen Glimmschutz und eine elektrische Maschine mit dem Glimmschutz.

Eine elektrische Maschine, wie beispielsweise ein Turbogenerator in einem Kraftwerk zur Erzeugung von elektrischer Energie, ist einer hohen mechanischen, thermischen und elektrischen Beanspruchung ausgesetzt. Der Turbogenerator weist insbesondere ein Blechpaket und eine Wicklung elektrischer Leiter auf. Das Blechpaket weist eine Mehrzahl an Nuten auf, in denen die Leiter eingebracht sind. An den beiden Enden des Blechpakets stehen die elektrischen Leiter aus dem Blechpaket hervor. Die Leiter sind von einer Hauptisolation umhüllt, die die Leiter gegeneinander, gegen das Blechpaket und gegen die Umgebung elektrisch isolieren.

Zur Vermeidung von Teilentladungen ist an der dem Leiter abgewandten Oberfläche der Hauptisolation ein Glimmschutz angeordnet. Zur Vermeidung von Teilentladungen an der Grenzfläche zwischen der Hauptisolation und dem Blechpaket weist der Glimmschutz zwischen der Hauptisolation und dem Blechpaket einen schwach elektrisch leitfähigen und geerdeten Außenglimmschutz auf, der aus dem Blechpaket hervorstehen kann. Zum Erden ist der Außenglimmschutz elektrisch leitend mit dem Blechpaket verbunden. Der Außenglimmschutz homogenisiert das von dem elektrischen Leiter ausgehende elektrische Feld. Damit können Bereiche mit lokal überhöhter elektrischer Feldstärke vermieden werden, wodurch auch die Entstehung von Teilentladungen an der Oberfläche der Hauptisolation unterbunden wird.

Weiterhin weist der Glimmschutz einen Endenglimmschutz auf, der am axialen Ende des Außenglimmschutzes an der Grenzfläche zwischen der Hauptisolation und der Umgebung vorgesehen ist.

Der Endenglimmschutz ist schwach elektrisch leitfähig und kann auch einen linear abnehmenden Widerstandsverlauf mit zunehmendem Abstand von dem Außenglimmschutz haben. Der Endenglimmschutz ist dabei eingerichtet, das im Betrieb des Turbogenerators gebildete elektrische Feld in einer Richtung weg von dem Blechpaket abzubauen.

Beschädigungen des Außenglimmschutzes, die beispielsweise beim Einlegen des mit der Hauptisolation und des Außenglimmschutzes umhüllten elektrischen Leiters in die Nut oder beim Eintrieb von Nutseidenfedern zwischen dem Außenglimmschutz und dem Blechpaket auftreten können, beeinträchtigen die das elektrische Feld homogenisierende Wirkung des Außenglimmschutzes und können zu einer Überhöhung der elektrischen Feldstärke und damit zu den Teilentladungen führen. Die Teilentladungen führen zu einer Zersetzung der Hauptisolation und des Außenglimmschutzes und verkürzen damit die Lebensdauer der elektrischen Maschine. Beschädigungen des Endenglimmschutzes können die das elektrische Feld abbauende Wirkung des Endenglimmschutzes beeinträchtigen und somit zu der Entstehung von Teilentladungen im Bereich des Endenglimmschutzes beitragen.

Aufgabe der Erfindung ist es daher einen Glimmschutz für eine elektrische Maschine zu schaffen, wobei mit dem Glimmschutz die Lebensdauer der elektrischen Maschine verlängerbar ist.

Der erfindungsgemäße Glimmschutz für eine elektrische Maschine weist einen Lack auf, der ein erstes Polymerharz, in dem ersten Polymerharz dispergierte erste elektrisch leitfähige Partikel und in dem ersten Polymerharz dispergierte Mikrokapseln aufweist, die in ihrem Inneren ein zweites Polymerharz aufweisen. Bei einer Beschädigung des erfindungsgemäßen Glimmschutzes platzen die Mikrokapseln in dem beschädigten Bereich auf, wodurch sich das in den Mikrokapseln befindende zweite Polymerharz in den beschädigten Bereich fließt und dort aushärtet. Dadurch kann der Glimmschutz sich selbst reparieren, wodurch der Glimmschutz und damit auch die elektrische Maschine eine lange Lebensdauer haben. Die ersten elektrisch leitfähigen Partikel verursachen dabei eine elektrische Leitfähigkeit des Glimmschutzes. In dem Fall, dass die ersten elektrisch leitfähigen Partikel in dem beschädigten Bereich des Glimmschutzes verbleiben, bewirken die elektrisch leitfähigen Partikel eine schwache elektrische Leitfähigkeit in dem reparierten Glimmschutz. Es ist bevorzugt, dass das erste Polymerharz und das zweite Polymerharz gleich sind. Bevorzugt ist, dass der Glimmschutz ein Außenglimmschutz und/oder ein Endenglimmschutz ist.

Es ist bevorzugt, dass der Lack zweite elektrisch leitfähige Partikel aufweist, die im Inneren der Mikrokapseln angeordnet sind. Dadurch fließen bei der Beschädigung des Glimmschutzes auch die zweiten elektrisch leitfähigen Partikel in den beschädigten Bereich. Dadurch wird erreicht, dass der beschädigte Bereich nach dem Aushärten des zweiten Polymerharzes elektrisch leitfähig ist, so dass ein von einem elektrischen Leiter der elektrischen Maschine ausgehendes elektrisches Feld auch im Bereich des beschädigten Bereichs und um diesen Bereich herum homogenisiert wird. Dadurch werden Feldstärkeüberhöhungen vorteilhaft unterbunden, wodurch Teilentladungen im Betrieb der elektrischen Maschine vermieden werden können. Es ist bevorzugt, dass der Massenanteil der Mikrokapseln bezogen auf den Lack und der Massenanteil der zweiten Partikel auf den Lack derart hoch gewählt wird, dass in dem ausgehärteten Bereich die zweiten Partikel überperkolierend vorliegen. Dies bedeutet, dass die zweiten Partikel in dem ausgehärteten Bereich ein durchgehendes Netzwerk bilden, das Randpunkte des ausgehärteten Bereichs miteinander verbindet, wodurch der beschädigte Bereich nach dem Aushärten des zweiten Polymerharzes insgesamt elektrisch leitfähig ist. Dabei ist bevorzugt, dass die ersten elektrisch leitfähigen Partikel und/oder die zweiten elektrisch leitfähigen Partikel Graphit, Ruß und/oder anorganische Partikel mit einer elektrisch leitfähigen Beschichtung aufweisen.

Es ist bevorzugt, dass die Summe der Gewichtsanteile der Mikrokapseln und der ersten elektrisch leitfähigen Partikel bezogen auf den Lack von 5 % bis 90 % beträgt. Die Zugabe der Mikrokapseln erhöht die Viskosität des Lacks. Eine niedrige Viskosität ist jedoch vorteilhaft beim Verarbeiten des Lacks. In dem angegebenen Wertebereich für den Gewichtsanteil hat der Lack eine ausreichende niedrige Viskosität für die Verarbeitung sowie einen ausreichend hohen Gewichtsanteil der Mikrokapseln, um eine gute Ausheilung des beschädigten Bereichs zu erreichen. Das Gewichtsverhältnis aus den Mikrokapseln zu den ersten elektrisch leitfähigen Partikeln ist bevorzugt von 1 bis 10, insbesondere von 1 bis 2.

Es ist bevorzugt, dass das Polymerharz ein Copolymer ist. Dabei ist bevorzugt, dass das Copolymer ein Polymer auf Basis von Polyacrylat, insbesondere Acrylsäureester und/oder Acrylnitril, und/oder Polystyrol ist. Weiterhin ist bevorzugt, dass ein Teil der Mikrokapseln lediglich eins der Monomere des Copolymers und ein anderer Teil der Mikrokapseln lediglich ein anderes der Monomere des Copolymers aufweist. Dadurch kommen die beiden Monomere vorteilhaft erst in Kontakt, wenn bei der Beschädigung die Mikrokapseln platzen, wodurch das Aushärten erst nach der Beschädigung erfolgen kann.

Die Mikrokapseln weisen bevorzugt in ihrem Inneren elektrisch nicht leitfähige anorganische Nanopartikel auf, insbesondere weisen die Nanopartikel TiO₂, SiO₂, Al₂O₃ und/oder MgO auf. In dem Fall, dass nach dem Aushärten des beschädigten Bereichs dennoch Teilentladungen in dem und oder in der Nähe des beschädigten Bereichs auftreten, so hat der mit den Nanopartikeln ausgehärtete Bereich eine höhere Festigkeit gegenüber die Teilentladungen und damit eine längere Lebensdauer, als es ohne die Nanopartikel der Fall wäre.

Die Mikrokapseln weisen bevorzugt in ihrem Inneren ein Lösungsmittel auf, insbesondere Ethanol, n-Propanol, Isopropanol, Ethylacetat und/oder ein Alkan, insbesondere n-Pentan, n-Hexan und/oder n-Heptan. Dadurch kann die Viskosität der sich in den Mikrokapseln befindenden Flüssigkeit, d.h. das Polymerharz mit dem Lösungsmittel, verringert werden, wodurch die Flüssigkeit nach dem Aufplatzen der Mikrokapseln sich fein in dem beschädigten Bereich verteilen kann und auch in sehr kleine Risse eindringen kann. Damit ist eine nahezu vollständige Reparatur des beschädigten Bereichs möglich. Zudem kann durch ein Verdampfen des Lösungsmittels das Aushärten des Polymerharzes erfolgen.

Es ist bevorzugt, dass das Wandmaterial der Mikrokapseln Wachs, Polyharnstoff-Formaldehyd und/oder Polyurethan aufweist. Die Mikrokapseln haben bevorzugt einen mittleren Durchmesser von 10 µm bis 1500 µm.

Es ist bevorzugt, dass die Mikrokapseln eine Wanddicke von 50 nm bis 500 nm haben. Durch diese Wanddicke haben die Mikrokapseln eine ausreichende Festigkeit, so dass sie beim normalen Verarbeiten des Lacks nicht platzen, aber gleichzeitig ist die Wanddicke derart, dass sie bei der Beschädigung des Glimmschutzes platzen.

Der Glimmschutz weist bevorzugt ein poröses Band auf, das von dem Lack durchtränkt ist. Durch das Band hat der Glimmschutz eine erhöhte mechanische Festigkeit. Bevorzugt hat das von dem Lack durchtränkte Band eine ausreichende Porosität, um in einem VPI-Verfahren (englisch: vacuum pressure impregnation) verarbeitet zu werden, d.h. die Porosität ist ausreichend hoch, damit das von dem Lack durchtränkte Band von einem Harz, insbesondere einem Epoxidharz, durchtränkt werden kann. Bevorzugt ist das Band nach dem durchgeführten VPI-Verfahren teilporös, so dass durch die Kapillarwirkung des Bands das sich in den Mikrokapseln befindende Polymerharz besonders gut bei der Beschädigung der Mikrokapseln in dem Band verteilen kann. Die Teilporosität kann beispielsweise mittels Hohlfasern in dem Band erreicht werden. Durch die Teilporosität kann der Glimmschutz besonders gut und ohne die Bildung von Lufteinschlüssen, die die Bildung der Teilentladungen begünstigen, ausheilen. Es ist bevorzugt, dass das Band ein Gewebe und/oder ein Vlies aufweist, insbesondere weist das Vlies und/oder das Gewebe Polyethylenterephthalat (PET), Polyester, Glas, Polyimid, Polyaramid, Polyamid, Polypropylen und/oder PTFE auf.

Die erfindungsgemäße elektrische Maschine weist einen elektrischen Leiter, eine Hauptisolation, die den elektrischen Leiter umhüllt, und den Glimmschutz auf, der auf die Außenseite der Hauptisolation aufgebracht ist. Der Glimmschutz ein Außenglimmschutz und/oder ein Endenglimmschutz sein.

Das erfindungsgemäße Verfahren zum Herstellen des Glimmschutzes weist die Schritte auf: - Aufbringen eines Lacks, der ein erstes Polymerharz, in dem ersten Polymerharz dispergierte erste elektrisch leitfähige Partikel und in ersten dem Polymerharz dispergierte Mikrokapseln aufweist, die in ihrem Inneren ein zweites Polymerharz aufweisen, auf eine einen elektrischen Leiter umhüllende Hauptisolation; - Aushärten des Polymerharzes. Dabei kann der Lack entweder direkt auf die Hauptisolation aufgebracht und ausgehärtet werden oder der Lack kann erst auf das Band aufgebracht und auf dem Band ausgehärtet werden und anschließend kann das Band mit dem ausgehärteten Lack auf die Hauptisolation aufgebracht werden. Es ist bevorzugt, dass der Lack ein Lösungsmittel, insbesondere Ethanol, n-Propanol, Isopropanol, Ethylacetat und/oder ein Alkan, insbesondere n-Pentan, n-Hexan und/oder n-Heptan, außerhalb und innerhalb der Mikrokapseln aufweist und das Polymerharz durch Verdunsten des außerhalb der Mikrokapseln sich befindenden Lösungsmittels ausgehärtet wird.

Im Folgenden wird anhand der beigefügten schematischen Zeichnungen die Erfindung näher erläutert. Es zeigen:
- Figur 1: ein erfindungsgemäßer Glimmschutz vor einer Beschädigung,
- Figur 2: den Glimmschutz nach der Beschädigung und
- Figuren 3 und 4: den Prozess des Ausheilens der Beschädigung.

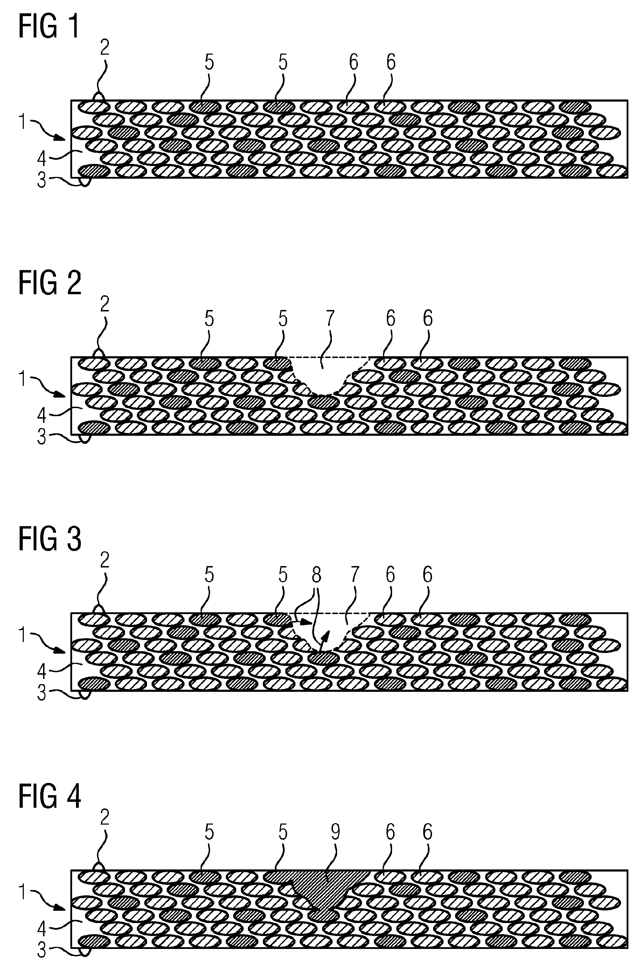

Wie es aus Figuren 1 bis 4 ersichtlich ist, weist ein Glimmschutz 1, beispielsweise ein Außenglimmschutz und/oder ein Endenglimmschutz, für eine elektrische Maschine einen Lack 4 auf. Der Lack 4 weist ein erstes Polymerharz, in dem ersten Polymerharz dispergierte erste elektrisch leitfähige Partikel 6 und in dem ersten Polymerharz dispergierte Mikrokapseln 5 auf. Die Mikrokapseln 5 weisen in ihrem Inneren ein zweites Polymerharz auf. Es ist denkbar, dass der Lack einen anorganischen und elektrisch nicht leitfähigen Füllstoff, beispielsweise in Form von Nanopartikeln, aufweist, wobei der Füllstoff in dem ersten Polymerharz und/oder zweiten Polymerharz dispergiert ist. Durch den Füllstoff lässt sich die Festigkeit des Glimmschutzes 1 gegenüber Teilentladungen erhöhen.

Die Mikrokapseln 5 können beispielsweise in einem Vertropfungsverfahren oder durch Emulsionspolymerisation hergestellt werden. Das Wandmaterial der Mikrokapseln 5 kann Wachs, Polyharnstoff-Formaldehyd und/oder Polyurethan aufweisen. Die Mikrokapseln 5 können einen mittleren Durchmesser von 10 µm bis 1500 µm haben. Die Mikrokapseln 5 können eine Wanddicke von 50 nm bis 3500 nm haben.

Der Lack 4 kann zweite elektrisch leitfähige Partikel aufweisen, die im Inneren der Mikrokapseln 5 angeordnet sind. Die zweiten elektrisch leitfähigen Partikel können hinsichtlich ihrer chemischen Zusammensetzung und ihrer Größe gleich sein wie die ersten elektrisch leitfähigen Partikel 6. Denkbar ist auch, dass die zweiten elektrisch leitfähigen Partikel hinsichtlich ihrer chemischen Zusammensetzung gleich sind wie die ersten elektrisch leitfähigen Partikel 6, jedoch einen kleineren mittleren Durchmesser als die ersten elektrisch leitfähigen Partikel 6 haben. Damit können die zweiten elektrisch leitfähigen Partikel einfacher in den Mikrokapseln 5 untergebracht werden. Beispielsweise können die ersten elektrisch leitfähigen Partikel und/oder die zweiten elektrisch leitfähigen Partikel Graphit, Ruß und/oder anorganische Partikel mit einer elektrisch leitfähigen Beschichtung aufweisen. Es ist denkbar, dass die elektrische Leitfähigkeit der zweiten Partikel höher als die elektrische Leitfähigkeit der ersten Partikel ist. Dadurch kann erreicht werden, dass die elektrische Leitfähigkeit der ausgehärteten beschädigten Bereiche trotz einer geringeren Partikelkonzentration gleich hoch wie vor der Beschädigung ist.

Die Summe der Gewichtsanteile der Mikrokapseln 5 und der ersten halbleitfähigen Partikel 6 bezogen auf den Lack 4 beträgt beispielsweise von 10 % bis 50 %. Das Gewichtsverhältnis aus den Mikrokapseln 5 zu den ersten elektrisch leitfähigen Partikeln ist beispielsweise von 1 bis 10, insbesondere von 1 bis 2.

Beispielsweise sind das erste Polymerharz und/oder das zweite Polymerharz ein Copolymer. Das Copolymer kann beispielsweise ein Polymer auf Basis von Polyacrylat, insbesondere Acrylsäureester und/oder Acrylnitril, und/oder Polystyrol sein. Denkbar ist, dass ein Teil der Mikrokapseln 5 lediglich eins der Monomere des Copolymers und ein anderer Teil der Mikrokapseln 5 lediglich ein anderes der Monomere des Copolymers aufweist. Dadurch wird erreicht, dass erst bei einem Platzen der Mikrokapseln 5 die beiden Monomere in Kontakt kommen und das zweite Polymerharz aushärten kann.

In einem anderen Beispiel kann das zweite Polymerharz ein Monomer aufweisen, das lediglich in einem Teil der Mikrokapseln 5 angeordnet ist. In einem anderen Teil der Mikrokapseln 5 kann ein Polymerisationsstarter angeordnet sein. Der Polymerisationsstarter kann in einem Lösungsmittel gelöst vorliegen. Dadurch wird erreicht, dass erst bei einem Platzen der Mikrokapseln 5 der Polymerisationsstarter und das Monomer in Kontakt kommen und somit das zweite Polymerharz aushärtet. Der Lack 4 kann einen Reaktivverdünner, wie beispielsweise 3-Ethyl-Oxetan-3-methanol oder cycloaliphatische Epoxide, aufweisen. Der Reaktivverdünner kann mit dem ersten Polymerharz und/oder mit dem zweiten Polymerharz vermischt sein.

Die Mikrokapseln 5 können zusätzlich in ihrem Inneren elektrisch nicht leitfähige anorganische Nanopartikel aufweisen. Beispielsweise können die Nanopartikel TiO₂, SiO₂, Al₂O₃ und/oder MgO aufweisen oder aus den vorgenannten Substanzen bestehen. Außerdem können die Mikrokapseln 5 in ihrem Inneren ein Lösungsmittel aufweisen, insbesondere Ethanol, n-Propanol, Isopropanol, Ethylacetat und/oder ein Alkan, insbesondere n-Pentan, n-Hexan und/oder n-Heptan.

Denkbar ist, dass der Glimmschutz 1 ein poröses, elektrisch nicht leitfähiges Band aufweist, das von dem Lack 4 durchtränkt ist. Das Band kann ein Gewebe und/oder ein Vlies aufweisen. Das Gewebe und/oder der Vlies können Hohlfasern aufweisen. Das Vlies und/oder das Gewebe können Polyethylenterephthalat (PET), Polyester, Glas, Polyimid, Polyaramid, Polyamid, Polypropylen und/oder PTFE aufweisen.

Figuren 1 bis 4 zeigen, wie sich der erfindungsgemäße Glimmschutz in der elektrischen Maschine selbst heilt. Die elektrische Maschine weist einen elektrischen Leiter, eine Hauptisolation, die den elektrischen Leiter umhüllt, und den Glimmschutz 1 auf. Der Glimmschutz 1 weist eine radiale Außenseite 2 und eine radiale Innenseite 3 auf. Der Glimmschutz 1 ist auf die radiale Außenseite der Hauptisolation aufgebracht, so dass die radiale Innenseite 3 an der radialen Außenseite der Hauptisolation anliegt. Die radiale Außenseite 2 des Glimmschutzes 1 ist mit einem Blechpaket der elektrischen Maschine in Berührkontakt und kann durch diesen Berührkontakt, durch Fremdeinwirkung und/oder durch Teilentladungen beschädigt werden, wodurch, wie in Figur 2 dargestellt, ein beschädigter Bereich 7 entsteht.

Durch die Beschädigung platzen die Mikrokapseln 5 auf und das in ihrem Inneren sich befindende zweite Polymerharz fließt in den beschädigten Bereich 7, wie es durch die Pfeile 8 in Figur 3 illustriert ist. Nach dem Aushärten des zweiten Polymerharzes ist der beschädigte Bereich 7 gefüllt und damit ausgeheilt, wie es mit dem Bezugszeichen 9 in Figur 4 dargestellt ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Glimmschutz für eine elektrische Maschine, mit einem Lack (4), der ein erstes Polymerharz, in dem ersten Polymerharz dispergierte erste elektrisch leitfähige Partikel (6) und in dem ersten Polymerharz dispergierte Mikrokapseln (5) aufweist,
die in ihrem Inneren ein zweites Polymerharz aufweisen.

2. Glimmschutz gemäß Anspruch 1,
wobei der Lack (4) zweite elektrisch leitfähige Partikel aufweist, die im Inneren der Mikrokapseln (5) angeordnet sind.

3. Glimmschutz gemäß Anspruch 1 oder 2,
wobei die ersten elektrisch leitfähigen Partikel (6) und/oder die zweiten elektrisch leitfähigen Partikel Graphit und/oder Ruß aufweisen.

4. Glimmschutz gemäß einem der Ansprüche 1 bis 3,
wobei die Summe der Gewichtsanteile der Mikrokapseln (5) und der ersten elektrisch leitfähigen Partikel (6) bezogen auf den Lack (4) von 5 % bis 90 % beträgt.

5. Glimmschutz gemäß einem der Ansprüche 1 bis 4,
wobei das Gewichtsverhältnis aus den Mikrokapseln (5) zu den ersten elektrisch leitfähigen Partikeln von 1 bis 10, insbesondere von 1 bis 2, ist.

6. Glimmschutz gemäß einem der Ansprüche 1 bis 5,
wobei das erste Polymerharz und/oder zweite Polymerharz ein Copolymer ist, wobei das Copolymer insbesondere ein Polymer auf Basis von Polyacrylat, insbesondere Acrylsäureester und/oder Acrylnitril, und/oder Polystyrol ist, wobei insbesondere das erste Polymerharz und das zweite Polymerharz gleich sind.

7. Glimmschutz gemäß Anspruch 6,
wobei ein Teil der Mikrokapseln (5) lediglich eins der Monomere des Copolymers und ein anderer Teil der Mikrokapseln (5) lediglich ein anderes der Monomere des Copolymers aufweist.

8. Glimmschutz gemäß einem der Ansprüche 1 bis 7,
wobei die Mikrokapseln in ihrem Inneren elektrisch nicht leitfähige anorganische Nanopartikel aufweisen, insbesondere weisen die Nanopartikel TiO₂, SiO₂, Al₂O₃ und/oder MgO auf.

9. Glimmschutz gemäß einem der Ansprüche 1 bis 8,
wobei die Mikrokapseln (5) in ihrem Inneren ein Lösungsmittel aufweisen, insbesondere Ethanol, n-Propanol, Isopropanol, Ethylacetat und/oder ein Alkan, insbesondere n-Pentan, n-Hexan und/oder n-Heptan.

10. Glimmschutz gemäß einem der Ansprüche 1 bis 9,
wobei das Wandmaterial der Mikrokapseln Wachs, Polyharnstoff-Formaldehyd und/oder Polyurethan aufweist.

11. Glimmschutz gemäß einem der Ansprüche 1 bis 10,
wobei die Mikrokapseln (5) einen mittleren Durchmesser von 10 µm bis 1500 µm haben, wobei die Mikrokapseln (5) insbesondere eine Wanddicke von 50 nm bis 3500 nm haben.

12. Glimmschutz gemäß einem der Ansprüche 1 bis 11,
wobei der Glimmschutz (1) ein poröses, elektrisch nicht leitfähiges Band aufweist, das von dem Lack (4) durchtränkt ist, wobei das Band insbesondere ein Gewebe und/oder einen Vlies aufweist, insbesondere weist das Vlies und/oder das Gewebe Polyethylenterephthalat, Polyester, Glas, Polyimid, Polyaramid, Polyamid, Polypropylen und/oder PTFE auf.

13. Elektrische Maschine mit einem elektrischen Leiter, einer Hauptisolation, die den elektrischen Leiter umhüllt, und einem Glimmschutz (1) gemäß einem Ansprüche 1 bis 12, der auf die Außenseite der Hauptisolation aufgebracht ist.

14. Verfahren zum Herstellen eines Glimmschutzes (1) gemäß einem der Ansprüche 1 bis 12,
mit den Schritten:
- Aufbringen eines Lacks (4), der ein erstes Polymerharz, in dem ersten Polymerharz dispergierte erste elektrisch leitfähige Partikel (6) und in dem ersten Polymerharz dispergierte Mikrokapseln (5) aufweist, die in ihrem Inneren ein zweites Polymerharz aufweisen, auf eine einen elektrischen Leiter umhüllende Hauptisolation;
- Aushärten des ersten Polymerharzes.

15. Verfahren gemäß Anspruch 14,
wobei der Lack (4) ein Lösungsmittel außerhalb und innerhalb der Mikrokapseln (5) aufweist und das Polymerharz durch Verdunsten des außerhalb der Mikrokapseln (5) sich befindenden Lösungsmittels ausgehärtet wird.
